# EUROPEAN PATENT APPLICATION

(11) **EP 2 706 733 A1**
(43) Date of publication of application: **12.03.2014**
(21) Application number: 13183111.7
(22) Date of filing: 05.09.2013
(51) Int. Cl.: H04L 29/08, H04L 12/24

(54) **Method for suspending traffic in control system of mesh network**

(30) Priority: 07.09.2012 FI 20125925
(71) Applicant: There Corporation OY, 65100 Vaasa (FI)
(72) Inventor: Syrjä, Mika, 00390 Helsinki (FI)
(74) Representative: Espatent Oy

(57) **Abstract**

A method for suspending traffic in a control system of a mesh network, the method including receiving a control message, by a control apparatus, in a normal state; detecting a mission critical action relating to a first control device, based on the received control message, wherein the mission critical action comprising at least one of the following: control device inclusion; control device exclusion; and mesh network topology update; entering a mission critical state; and suspending traffic relating to a second control device in the mission critical state. The method further including performing the mission critical action by communicating with the first control device; and returning from the mission critical state to the normal state in response to performing the mission critical action.

## Description

### TECHNICAL FIELD

The present application generally relates to a system, method and apparatus for suspending traffic in a control system of a mesh network.

### BACKGROUND ART

A control system typically comprises a node or functionality that controls, manages or uses a set of control devices, for example in a building or in other geographically limited area.

New control devices may be included to the control system by attaching, i.e. creating an association between the control device and the control system. In Z-Wave technology, the association is created by first setting the control system into an inclusion-mode and while in the inclusion-mode, by pushing a signal button at the target device. In Bluetooth™ the association is created by first searching potential devices and then pairing the selected target device by giving the four-digit secret pairing code, for example.

The control system may need to configure the attached control device, for example set message routing information or set measurement rules. The configuration procedures may form a task set of inquiries and commands that needs to be communicated with the control device during the introduction to the system. Once the task set is finished, the services of the control device can be presented in a user interface of a controlling apparatus and the user can take the services in use.

It is possible that messages in wireless mesh networks can be lost or even corrupted due to various reasons. For example, overlapping networks interfere each other, attenuation may exist due to distance between transmitting and receiving entities, reflection and distortion may be caused by building constructions, etc. Used communication technology may incorporate retransmission capability, but that does not necessary guarantee the communication between the control system and the control device under introduction to succeed.

In a control system of a mesh network, there may exist mission critical operations that require minimized possibility of failing. On the other hand service requests from service objects of an application level of the control system may be received. A solution is needed for reliably performing the mission critical operations and at the same time handle incoming service requests over the mesh network without congesting the mesh network.

### SUMMARY

According to a first example aspect of the invention there is provided a method for suspending traffic in a control system of a mesh network, characterized in that the method comprising:
receiving a control message, by a control apparatus, in a normal state;
detecting a mission critical action relating to a first control device, based on the received control message, wherein the mission critical action comprising at least one of the following:
   - control device inclusion;
   - control device exclusion; and
   - mesh network topology update;
entering a mission critical state;
suspending traffic relating to a second control device in the mission critical state;
performing the mission critical action by communicating with the first control device; and
returning from the mission critical state to the normal state in response to performing the mission critical action.

In an embodiment, the mission critical action comprising at least one of the following:
- control device inclusion;
- control device exclusion; and
- mesh network topology update.

In an embodiment, the method further comprising:
receiving a control message generated by a user of the control apparatus;
detecting the mission critical action being an inclusion of the first control device;
performing the inclusion of the first control device by processing configuration tasks with the first control device; and
providing control device functionality for a user of the control apparatus in response to closing the configuration tasks for the first control device.

In an embodiment, the method further comprising:
receiving, in the mission critical state, a service request relating to the second control device; and
rejecting the service request.

In an embodiment, the method further comprising:
defining a timer value triggered when entering to the mission critical state; and
resuming to the normal state in response to expiration of the timer value.

In an embodiment, the method further comprising:
defining an application layer for providing application level service for a user;
defining an adaptation layer for providing application level service for the user; and
defining a wireless technology layer for transceiving messages in the mesh network, wherein the adaptation layer being configured to control entering and exiting the mission control state.

In an embodiment, the method further comprising:
receiving the service request relating to the second control device by an adaptation layer.

According to a second example aspect of the invention there is provided an apparatus for suspending traffic in a control system of a mesh network, characterized in that the apparatus comprising:
a communication interface for transceiving information, over a mesh network connection, between the apparatus and control devices;
at least one processor; and
at least one memory including computer program code;
   the at least one memory and the computer program code configured to, with the at least one processor, cause the apparatus to:
receive a control message in a normal state;
detect a mission critical action relating to a first control device, based on the received control message, wherein the mission critical action comprising at least one of the following:
   - control device inclusion;
   - control device exclusion; and
   - mesh network topology update;
enter a mission critical state;
suspend traffic relating to a second control device in the mission critical state;
perform the mission critical action by communicating with the first control device; and
return from the mission critical state to the normal state in response to performing the mission critical action.

In an embodiment, the mesh network connection comprises at least one of the following:
- Z-Wave; and
- Zigbee.

In an embodiment, the control device comprises at least one of the following:
- a sensor;
- an energy meter;
- a temperature meter;
- a humidity meter;
- a switch;
- a motion detector;
- a door opening/closing detector;
- a window opening/closing detector; and
- an input/output device.

According to a third example aspect of the invention there is provided a computer program embodied on a computer readable medium comprising computer executable program code characterized in that the computer executable program code, when executed by at least one processor of an apparatus, causes the apparatus to:
receive a control message in a normal state;
detect a mission critical action relating to a first control device, based on the received control message, wherein the mission critical action comprising at least one of the following:
   - control device inclusion;
   - control device exclusion; and
   - mesh network topology update;
enter a mission critical state;
suspend traffic relating to a second control device in the mission critical state;
perform the mission critical action by communicating with the first control device; and
return from the mission critical state to the normal state in response to performing the mission critical action.

Different non-binding example aspects and embodiments of the present invention have been illustrated in the foregoing. The above embodiments are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

The invention will be described, by way of example only, with reference to the accompanying drawings, in which:
- Fig. 1: shows a schematic picture of a system according to an example embodiment of the invention;
- Fig. 2: presents an example block diagram of a control system in which various embodiments of the invention may be applied;
- Fig. 3: presents an example block diagram of an apparatus in which various embodiments of the invention may be applied;
- Fig. 4: presents an example block diagram of a control device in which various embodiments of the invention may be applied;
- Fig. 5: shows a flow diagram showing operations in accordance with an example embodiment of the invention; and
- Fig. 6: shows a flow diagram showing phases in accordance with an example embodiment of the invention.

### DETAILED DESCRIPTION

In the following description, like numbers denote like elements.

In an embodiment, a method is provided that can be used when mission critical actions need to be performed in the mesh network, ensuring that the actions succeed. Mesh network traffic may be suspended when mission critical network action needs to take place, and resuming the traffic in the mesh network when the mission critical network action has been finished. This kind of suspend and resume method can be used with wireless communication technologies like Z-Wave, Zigbee, etc. An example of the mission critical action may be new control device inclusion.

When a new control device (node) is included to the control system, the control system needs to recognize the control device in order to offer the device services to the end user via a user interface of an apparatus, for example. Examples of services the control devices may provide include various kind of meters (energy meters, temperature meters, humidity meters), switches, motion detectors, door/window detectors, IO-devices etc. The list above is not exhaustive. The control system may also need to configure the control device, for example set message routing information or set some measurement rules, for example "report-on-change" temperature change delta trigger value. The list above is not exhaustive.

The above procedures form a task set of inquiries and commands that need to be communicated with the control device during introduction to the control system. In multitasking environment it is possible that a technology specific adaptation layer of the system controller may be requested to communicate to another control device, other than the mission critical action targets to. In such case, it would be beneficial, if the technology adaptation specific layer would be able to decline service object requests. It is thus possible to ensure that only traffic in the network is generated by the technology specific adaptation layer towards the control device that is target of the mission critical action, together with control device responses.

In addition, some control devices may send unsolicited messages. By rejecting service object requests, a possibility that mission critical action fails, is reduced.

In wireless mesh network, a message may be lost or corrupted due to various reasons. For example, overlapping network interference, attenuation due to distance between transmitting and receiving entities, reflection and distortion caused by building constructions, or the transaction timeout, for example. Used communication technology may incorporate retransmission capability, but such capability does not necessarily guarantee that communication between the control system and the control device under mission critical message transmission will succeed.

When the control system receives readings from and transmits commands to the control devices, traffic is generated in the mesh network. Depending on the number of the control devices and the command sending rate, the network might get highly loaded, or even congested. Besides control system generated traffic, also the control devices may send unsolicited messages to the network.

Depending on the used technology and the network topology, the message from a sender to a recipient may not be sent directly, but instead the messages may hop via other nodes in the network, before finally reaching the destination. If the sent message is a command or a request, the same hopping may also apply to a response message that the control device sends back to the control system.

In an embodiment, mission critical operations may exist in the control system. Such operations may comprise control device inclusion into the system, for example. Other mission critical operations exist too, for example network administrative actions or control device exclusion. A control device to be included may be battery operated. Typically, battery operated devices wake up periodically, turn radio on, and communicate with the control system or with other control devices, and then fall asleep. In order to save battery lifetime, some battery operated control devices may keep the radio turned on for a very short time after the last message transmission, and if receiving no more messages, turning the radio off and falling asleep till next wake-up cycle.

In an embodiment, the control system may comprise multi-tasking environment, where control device related service objects are received for example requesting meter reading of at least one control device. In the control system there may also be a technology specific adaptation layer, which converts control system internal messaging to the mesh network technology specific messages, and vice versa.

In an embodiment, the control system may enter a mission critical state, for example a control device inclusion state. In such state, control device related service objects may try to request meter reading or some other commanding, independently from each other, and accessing the control devices via the adaptation layer, thus using the network bandwidth.

It is possible that during the control system being in inclusion state, a control device related service object wants to access at least one control device, and such transaction takes time so long that another control device, which was under inclusion, may have turned radio off, and the control system is not able to do inclusion related control device configuration. Reason for the transaction taking so long, might be for example the message hopping via other nodes in the network, or the network needing to find alternative route to access the destination control device. Another reason may be message corruption, for example.

In such situation the control device under inclusion may be in state where the inclusion is failed, and services offered by the control device are partially or completely unusable. It would be beneficial for the control system to be able to halt or suspend the network traffic during the mission critical state, except for the parts of the network to which the mission critical actions targets to. When the mission critical state has been finished, all traffic may be resumed ongoing again.

In an embodiment, a mesh network consists of a system controller, such as a control apparatus, and network nodes, such as control devices. The control apparatus incorporates a wireless technology specific network controller layer, an adaptation layer and an application layer including control device related service objects. The control system may also comprise multiple wireless technology specific network controller layers and related adaptation layers, each also may comprise multiple service objects. Same kind of wireless technology or different kind of technologies may be used. In any case, they may compose own independent mesh networks.

Application layer including control device related service object may take care of service logic, for example maintaining meter readings and related databases, calculating day/week/month/year averages, providing timer based on / off switch control, setting thermostat temperature, etc. The list above is not exhaustive.

The adaptation layer may convert system controller internal communication methods, such as requests from service objects, to the wireless technology communication methods, and vice versa. The wireless technology controller layer may or may not incorporate wireless technology specific retransmissions. Suspending features and mission critical state implementation may be implemented in technology specific adaptation layer using threads or processes, for example.

The wireless technology specific network controller may take care of communication with the adaptation layer and the nodes in the mesh network.

In an embodiment, a control apparatus may receive a control message from which the control apparatus identifies a need for a mission critical action. The adaptation layer may detect that the mission critical action needs to be performed in the network. A user of the control apparatus may, for example, activate a control device inclusion into the control system using a user interface of the control apparatus. The device inclusion may be regarded as the mission critical action, for example. Adding the node to the mesh network may be technology specific, as such. Furthermore, the adaptation layer may use different kind of methods to detect when to enter mission critical action. Such detection triggers may comprise for example:
- action type
- request-response transaction duration
- request-response route
- statistical calculations
- mesh network related calculation

In an embodiment, when an adaptation layer enters a mission critical state, the adaptation layer may reject requests from service objects. For example, a meter reading request for a control device is rejected. Furthermore, in such situation the adaptation layer may also return cached meter reading value and indicate that the reading is not actual reading from the meter but a cached one. This way, for example meter reading graph may be shown in a user Interface of a control apparatus, and just indicated that some of the readings may not be actual but cached.

In an embodiment, by rejecting requests from service objects, an adaptation layer reduces messaging. The adaptation layer ensures that only messaging in a network is generated by itself and a control device relating to a mission critical action. Additionally, control devices that are enabled for sending unsolicited messages may do so. However, if the adaptation layer receives unsolicited messages, such messages may be forwarded to the related service object. This way the whole network bandwidth may be dedicated almost completely for the mission critical action, and to ensure the action succeeding.

In an embodiment, however, if a mission critical action fails, a safety timer may be used to resume normal operational state. Such timer may ensure that a control device is not left in the mission critical state forever. A length of the timer may be dynamically decided or pre-configured, for example depending on the mission critical action that is to be taken.

In case the control system incorporates multiple wireless technology controllers, related adaptation layers and service objects, traffic they generate in their mesh network maintains in their normal operational state. Suspend / resume action affects only in the mesh network that the adaptation layer requesting traffic suspend and resume belongs to.

In an embodiment, after a mission critical action is completed, an adaptation layer may resume back to a normal operational state and accept requests again. The adaptation layer may forward a received request to the network, and if responses are received, forward the responses back to the related service objects.

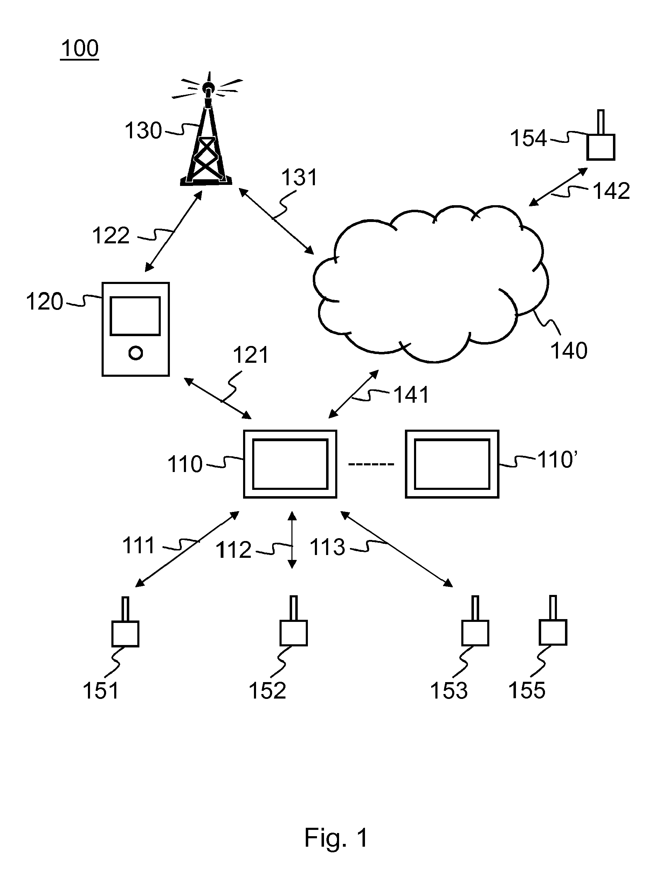

Fig. 1 shows a schematic picture of a system 100 according to an example embodiment of the invention. The system 100 comprises a control apparatus 110 configured to be capable of managing control devices 151-153, such as sensors, meters or switches. The control apparatus 110 is configured to be connectable to the control devices over a data connection 111-113. The data connection 111-113 may be a wired connection or a wireless connection. Furthermore, the data connection 111-113 may comprise a mesh network, a point-to-point network or a bus network, for example. The wired connection may comprise Universal Serial Bus (USB), High-Definition Multimedia Interface (HDMI), M-bus, or local area network (LAN) such as Ethernet, for example. The wireless connection may comprise Bluetooth™, Radio Frequency Identification (RF-ID), Z-Wave, ZigBee, Infrared or wireless local area network (WLAN), for example. The system 100 may further comprise a second control apparatus 110' configured to be capable of managing the control devices 151-153, such as sensors, meters or switches. The control apparatus 110 may hand over the control devices 151-153 to the second control apparatus 110'.

The control apparatus 110 is configured to send requests for control device data, controlling data or assignment/revocation information to the control devices 151-153. The control devices 151-153 are configured to send control device data, requests or assignment/revocation information to the control apparatus 110. A user of the apparatus 110 may utilize a user interface of the control apparatus 110 for communicating with the system 100, for example. The control devices 151-153 may also be configured to send control device data over the data connection 111-113 automatically to the control apparatus 110. Such settings may comprise for example time of the day, amount of newly captured control device data or existence of the data connection 111-113 for the control apparatus 110. The data communication between the control apparatus 110 and the control devices 151-153 may also be triggered by a user of the control apparatus 110 or a control process of the control apparatus 110, for example.

In an embodiment, the system 100 comprises a remote control device 154 configured to be connectable to the control apparatus 110 over a data connection 140-142. The data connection 140-142 may comprise any wired or wireless connection described for the connections 111-113 between the control apparatus 110 and the control devices 151-153. The control apparatus 110 and the remote control device 154 may be connected to a public data communication network 140, for example the Internet, over data connections 141 and 142, respectively.

The user terminal 120 may comprise a mobile phone, an internet tablet or a laptop computer, for example. The user terminal 120 is capable of downloading and locally executing software program code. The software program code may be a client application of a service application running on the control apparatus 110 of the system 100. The user terminal 120 is configured to be connectable to a wireless communication network 130 over a wireless connection 122. The wireless connection 122 may comprise a mobile cellular network or a wireless local area network (WLAN), for example. The wireless communication network 130 may be connected to a public data communication network 140, for example the Internet, over a data connection 131.

In an embodiment, the user terminal 120 is configured to be connectable to the control apparatus 110 over a data connection 121. The data connection 121 may comprise any wired or wireless connection described for the connection 111-113 between the control apparatus 110 and the control devices 151-153.

In an embodiment, the system 100 may utilize for any data connection 111-113, 121-122, 131, 140-142 wireless or wired technologies, in which control devices are not statically configured to the control system 100 but the control devices can also be included to and excluded from the control system 100 through similar kind of dynamic procedure like in wireless technologies discussed earlier in this application. Such systems are often internet protocol (IP) based and typically based on some special control protocol on top of the internet protocol (IP).

The control devices that can be dynamically managed may comprise for example a sensor, an energy meter, a temperature meter, a humidity meter, a switch, a motion detector, a door opening/closing detector, a window opening/closing detector, and an input/output device.

In an embodiment, a control device 151-154 provides a set of services that a user can access through a control system 100 using a user interface of a control apparatus 110 or a user terminal 120, for example. As an example, a switch device 151-154 may be considered to provide a switch service, which consists of the switch states 'on' and 'off and corresponding functions defined for both states. One control device 151-154 may also provide multiple services. For example, an energy-meter device 151-154 may provide a switch-service and an energy-meter service. The service concept may also enable the control system 100 to provide additional attributes and methods for the control device 151-154. The additional attributes and methods may comprise various kinds of calculations or statistics based on the control device data the control device 151-154 is able to provide. Such attributes and methods may comprise event logs, authentication and access control mechanisms, convenience attributes like nicknames and location data, for example. Characteristically, the additional attributes and methods may be implemented in the control system 100 with no or minimum involvement of the control device 151-154.

In an embodiment, a control device 155 may be a new device not yet included in the control system but will be included through control device inclusion utilizing mission critical state.

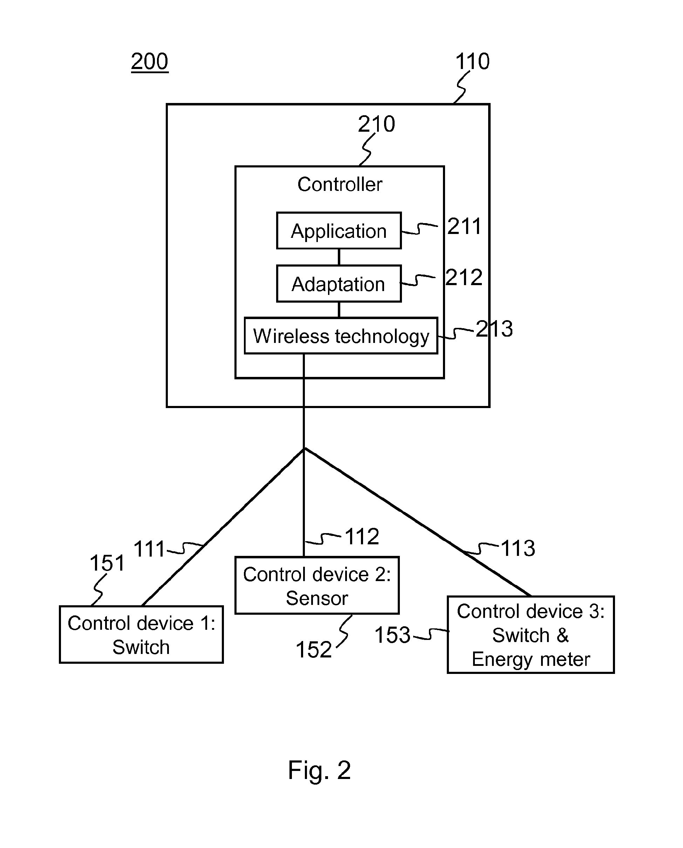

Fig. 2 presents an example block diagram of a mesh network control system 200 in which various embodiments of the invention may be applied. A control apparatus 110 of the mesh network may comprise for example a laptop computer, a desktop computer, a tablet or a server computer apparatus. The control system 200 enables attaching of control devices 151-153 and services to the apparatus 110. The services may be implemented in the control apparatus 110 as service objects provided by an application layer 211. If the control device 151-153 is attached to the apparatus 110, the control device 151-153 may be assigned to the service object of the application layer 211 providing service functionality for the user.

The mesh network control apparatus 110 may further comprise a system controller 210. The system controller 210 incorporates a wireless technology specific network controller layer 213, an adaptation layer 212 and the application layer 211. The application layer 211 takes care of the service logic, as described above.

The adaptation layer 212 may convert system controller 210 internal communication signals to wireless technology communication signals. The wireless technology controller layer 213 may incorporate wireless technology specific retransmissions.

The wireless technology specific network layer 213 may take care of communication with the adaptation layer 212 and nodes 151-153 in the mesh network control system 200. It is technology specific how the node 151-153 is added to the mesh network control system 200. After the node 151-153 has been added and it is known to the system controller 210, configuration tasks may take place. The system controller 210 starts to execute set of tasks, inquiries and commands, which may be pre-configured or dynamic as the system controller 210 learns more about the node 151-153 introduced to the system 200. In an embodiment, the set of tasks executed by the system controller 210 may be affected by the system controller capabilities. The system controller 210 may for example inquire device information, e.g. manufacturer, device type, serial number etc. The list above is not exhaustive. The system controller 210 may also set device configuration, for example message routing information or device wake-up interval if the device is battery operated and it turns on the radio within configured intervals for communication with wireless technology controller 213 or with other nodes 151-153 in the mesh network 200. For such battery operated devices the system controller can set a short wake-up signal that can be used as a task execution trigger.

In an embodiment, the task execution trigger may comprise, instead of the wake-up signal, a triggering message indicating a device active state. Such triggering message may be user initiated or not and comprise, for example, a temperature value, a meter value and a door opening/closing signal. The control device 151-153 may send the triggering signal to be used as a task execution trigger. The device active state means that the control device radio is turned on and communication with the control device 151-153 is possible.

Once a task has been completed, the system controller 210 may select the next task and execute it right away. If the task fails, the system controller 210 may fall in "sleep state" for a length of period which can be pre-configured or dynamically decided. This way the system controller 210 may prevent congesting the mesh network 200, as in normal case the system controller 210 would try to execute the task again right away after the previous try failed. While the system controller 210 is in sleep state the mesh network 200 is available for other communication, for example energy meter device value reading. If the system controller 210 is in sleep state and a battery operated control device 151-153 that is under introduction wakes up, such wake up can be used as a trigger to continue task execution even though the sleep state period has not finished yet. This ensures faster device introduction.

Once all tasks have been completed, the control device 151-153 with related services is ready to be used by the user of the control apparatus 110. Task execution and task set finishing can be shown in the user interface of the control apparatus 110 to reflect the progress, so that the end user knows status of the device introduction.

When the user needs to communicate with the control system 200, user requests are delivered by the controller 210 to the desired service object of the application layer 211, which in turn communicates with the adaptation layer 212 before transmitting messages via the wireless technology layer 213 to the control device 151-153. Such communication may be utilized using a data connection 111-113. The data connection 111-113 may comprise for example Z-Wave in the mesh network 200.

The control system 200 reduces congestion in the mesh network and enables reliable and user-friendly attaching of control devices 151-153 to the control apparatus 110.

In an embodiment, the control device 151-153 comprises an energy meter of a rental holiday home and the service provided for the user is energy metering of a tenant living in the rental holiday home. The energy consumption of the tenant during her or his stay can be measured by assigning the energy meter to the tenant at the beginning of the stay and revoking the energy meter at the end of the stay.

In an embodiment, a control device 151 may comprise a switch, a control device 152 may comprise a sensor and a control device 153 may comprise a switch and an energy meter, for example. The control devices 151-153 are attached to the apparatus 110 by user request. In response to the request, for example, the controller 210 informs service objects of the application layer 211. Based on the received information the service objects of the application layer 211 assign with corresponding control devices 151-153 using the configuration tasks created by the adaptation layer 212. Configuration messages provided by the adaptation layer 212 are transmitted to the corresponding control devices 151-153 using the wireless technology layer 213 messages. Thus the service objects of the application layer 211 are attached to the corresponding control devices 151-153. Switching energy mode as active/inactive may be carried out with the application layer objects based on user requests and communicating corresponding control data to the control device 151 comprising the switch. Measuring temperature may be carried out with another service object of the application layer 211 and metering energy consumption may be carried out with still another service object of the application layer 211 based on user requests and communicating corresponding control data to the control device 153 comprising the energy meter. Energy metering data from the control device 153 may be communicated over the data connection 113 per request or automatically, for example periodically. A single service object or application of the application layer 211 may also comprise a plurality of service objects or applications.

In an embodiment, at least one data connection 111-113 is based on Z-Wave technology. Z-Wave is a proprietary wireless communications protocol designed for home automation, specifically to remote control applications in residential and commercial environments. The technology uses a low-power radio embedded or retrofitted into electronic devices and systems, such as lightning, home access control, entertainment systems, and household appliances.

Z-Wave communicates using a low-power wireless technology designed specifically for remote control applications. The Z-Wave wireless protocol is optimized for reliable and low-latency communication of small data packets, unlike typical wireless local area network systems that are designed primarily for high-bandwidth data flow. Z-Wave operates in the sub-gigahertz frequency range, around 900MHz. This band competes with some cordless telephones and other consumer electronics devices, but avoids interference systems that operate on the crowded 2.4GHz band. Z-Wave is designed to be easily embedded in consumer electronics products, including battery operated devices such as remote controls, smoke alarms and security sensors, for example.

Z-Wave is a mesh networking technology, where each node or device 110, 151-153 on the network is capable of sending and receiving control commands through walls or floors and use intermediate nodes to route around household obstacles or radio dead spots that might occur in the home. Z-Wave devices, like control devices 151-153 can work individually or in groups, and can be programmed into scenes or events that trigger multiple control devices 151-153, either automatically or via remote control. By adding Z-Wave to control system 200, it is possible to control and monitor for example household functions via remote control, based on manual or automated decisions. The control can be applied to a single control device 151-153 or to a group of control devices 151-153, in a single room, zone or throughout the entire building. One benefit of Z-Wave over power line communication technologies is the ability to function in older houses lacking a neutral wire. Z-Wave control devices 151-153 can also be monitored and controlled from outside of the building by way of a gateway that combines Z-Wave with broadband Internet access, as showed in Fig. 1.

In an embodiment, Z-Wave enabled thermostat 153 is able to raise or lower an indoor temperature of a building automatically, based on commands or sensor data from Z-Wave enabled daylight sensor 152. Grouped scene controls can ensure that unnecessary energy consumption is minimized by various all-off states for systems throughout the building, such as lightning, appliances and home entertainment systems.

In an embodiment, Z-Wave based system 200 can transceive commands based on real time conditions, and is able to control devices 151-153 in intelligent groupings, hence allowing novel extensions of traditional home security concepts. As an example, the opening of a Z-Wave enabled door lock 151-153 can deactivate a security system, turn on lights 151-153 when children arrive home from school, and send a notification to a parent's computer or cell phone via the Internet. Opening a Z-Wave enabled garage door 151-153 can trigger exterior and interior home lights, while a Z-Wave motion detector 151-153 can trigger an outdoor security light 151-153 and a webcam 151-153, which would allow the end user to monitor the home while away.

In an embodiment, Z-Wave's ability to command multiple control devices 151-153 as a unified event makes a system 200 well suited for home audio and video applications. For example, a simple "Play DVD" command on the remote control 110 could turn on the needed components 151-153, set them to the correct inputs and even lower motorized shades and dim the room lights.

In an embodiment, the control system 200 may comprise a second control apparatus 110' as illustrated in Fig. 1. The functional structure of the second control apparatus 110' corresponds to the structure of the control apparatus 110 provided in Fig. 2.

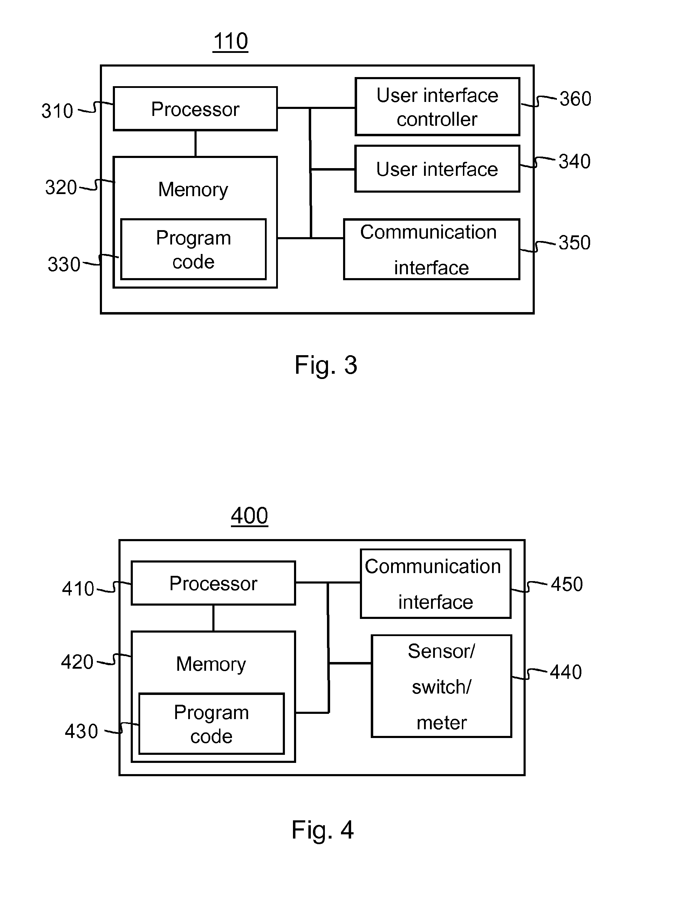

Fig. 3 presents an example block diagram of an apparatus 110 in which various embodiments of the invention may be applied. The apparatus 110 may be a laptop, a desktop, a tablet, a server computer or other computer apparatus.

A general structure of a control apparatus 110 comprises a user interface 340, a communication interface 350, a processor 310, and a memory 320 coupled to the processor 310. The control apparatus 110 further comprises software 330 stored in the memory 320 and operable to be loaded into and executed in the processor 310. The software 330 may comprise one or more software modules and can be in the form of a computer program product. A service object, a service function, an application layer 211, an adaptation layer 212 and a wireless technology layer 213, may be comprised in the software modules. The control apparatus 110 may further comprise a user interface controller 360.

The processor 310 may be, e.g., a central processing unit (CPU), a microprocessor, a digital signal processor (DSP), a graphics processing unit, or the like. Fig. 3 shows one processor 310, but the control apparatus 110 may comprise a plurality of processors. A controller 210 may be comprised by the processor 310.

The memory 320 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The control apparatus 110 may comprise a plurality of memories. The memory 320 may be constructed as a part of the apparatus 110 or it may be inserted into a slot, port, or the like of the control apparatus 110 by a user. The memory 320 may serve the sole purpose of storing data, or it may be constructed as a part of an apparatus serving other purposes, such as processing data.

The user interface controller 360 may comprise circuitry for receiving input from a user of the control apparatus 110, e.g., via a keyboard, a graphical user interface shown on the display of the user interface 340 of the control apparatus 110, a speech recognition circuitry, or an accessory device, such as a headset, and for providing output to the user via, e.g., a graphical user interface or a loudspeaker.

The communication interface module 350 implements at least part of data transmission. The communication interface module 350 may comprise, e.g., a wireless or a wired interface module. The wireless interface may comprise such as a WLAN, Z-Wave, Zigbee, Bluetooth™, Infrared (IR), Radio Frequency Identification (RF ID), GSM/GPRS, CDMA, WCDMA, or LTE (Long Term Evolution) radio module. The wired interface may comprise such as Universal Serial Bus (USB), Local Area Network (LAN) such as Ethernet or M-bus, for example. The communication interface module 350 may be integrated into the control apparatus 110, or into an adapter, card or the like that may be inserted into a suitable slot or port of the control apparatus 110. The communication interface module 350 may support one data interface technology or a plurality of technologies. The apparatus 110 may comprise a plurality of communication interface modules 350. Data communication between a device object and a control device may be transmitted using the communication interface 350. Furthermore, user communication data from a remote user terminal 120 may also be transmitted using the communication interface 350.

A skilled person appreciates that in addition to the elements shown in Fig. 3, the control apparatus 110 may comprise other elements, such as microphones, extra displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the control apparatus 110 may comprise a disposable or rechargeable battery (not shown) for powering when external power if external power supply is not available.

In an embodiment, the system 100, 200 may comprise a second control apparatus 110' as illustrated in Fig. 1. The block diagram of the second control apparatus 110' corresponds to the block diagram of the control apparatus 110 provided in Fig. 3.

Fig. 4 presents an example block diagram of a control device 400 in which various embodiments of the invention may be applied. The control device 400 may be a sensor, a switch or a meter, for example.

The general structure of the control device 400 comprises a processor 410, and a memory 420 coupled to the processor 410. The control device 400 further comprises software 430 stored in the memory 420 and operable to be loaded into and executed in the processor 410. The software 430 may comprise one or more software modules and can be in the form of a computer program product.

The processor 410 may be, e.g., a central processing unit (CPU), a microprocessor, a digital signal processor (DSP), a graphics processing unit, or the like. Fig. 4 shows one processor 410, but the control device 400 may comprise a plurality of processors.

The memory 420 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The control device 400 may comprise a plurality of memories. The memory 420 may be constructed as a part of the control device 400 or it may be inserted into a slot, port, or the like of the control device 400 by a user. The memory 420 may serve the sole purpose of storing data, or it may be constructed as a part of an apparatus serving other purposes, such as processing data.

The control device 400 may further comprise a sensor/switch/meter element 440 that may comprise a sensor, an energy meter, a temperature meter, a humidity meter, a switch, a motion detector, a door opening/closing detector, a window opening/closing detector, or an input/output device.

The communication interface module 450 implements at least part of data transmission. The communication interface module 450 may comprise, e.g., a wireless or a wired interface module. The wireless interface may comprise such as a WLAN, Z-Wave, Zigbee, Bluetooth™, Infrared (IR), Radio Frequency Identification (RF ID), GSM/GPRS, CDMA, WCDMA, or LTE (Long Term Evolution) radio module. The wired interface may comprise such as Universal Serial Bus (USB), Local Area Network (LAN) such as Ethernet or M-bus, for example. The communication interface module 450 may be integrated into the control device 400, or into an adapter, card or the like that may be inserted into a suitable slot or port of the control device 400. The communication interface module 450 may support one data interface technology or a plurality of technologies. The control device 400 may comprise a plurality of communication interface modules 450. Data communication between a device object and a control device may be transmitted using the communication interface 450.

A skilled person appreciates that in addition to the elements shown in Fig. 4, the control device 400 may comprise other elements, such as microphones, displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the control device 400 may comprise a disposable or rechargeable battery (not shown) for powering when external power if external power supply is not available

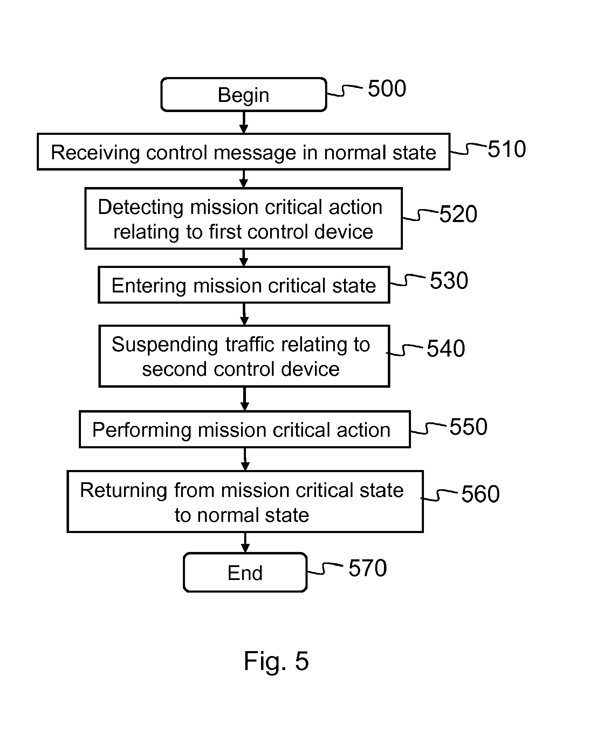

Fig. 5 shows a flow diagram showing operations in accordance with an example embodiment of the invention. In step 500, the method for suspending traffic in a control system of a mesh network is started. In step 510, a control message is received, by a control apparatus, in a normal state. In step 520, a mission critical action relating to a first control device is detected, based on the received control message. In step 530, a mission critical state is entered. In step 540, traffic relating to a second control device is suspended in the mission critical state. In step 550, the mission critical action is performed by communicating with the first control device. In step 560, the mission critical state is returned to the normal state in response to performing the mission critical action. The method is ended in step 570.

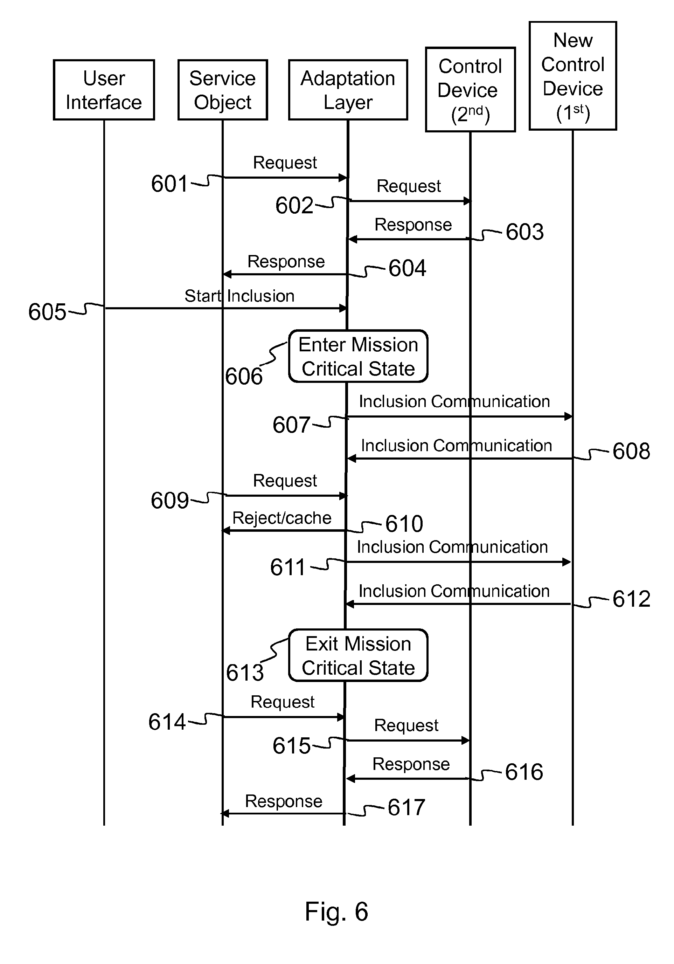

Fig. 6 shows a flow diagram showing phases in accordance with an example embodiment of the invention. Wireless technology layer is not shown in Fig. 6 for simplifying the figure but communications between an adaptation layer and control devices are utilized using the wireless technology layer no matter not shown in the figure. Only one service object is shown in Fig. 6 for simplifying the figure but there may be a plurality of service objects communicating with the control devices using the adaptation layer. A service object of an application layer requests for example a reading from a second control device, such as a temperature sensor in phase 601. In phase 602, the request is converted by the adaptation layer for the second control device. The second control device may respond with the requested information in phase 603. In phase 604, the adaptation layer converts the response for the requesting service object. In phase 605, a user of a control apparatus would like to include a new control device by triggering a start inclusion phase 605 from a user interface of the control apparatus, for example. The adaptation layer receives the inclusion request and detects the inclusion is a mission critical operation. In response to the detection, the adaptation layer enters a mission critical state in phase 606.

In phase 607, the adaptation layer starts inclusion communication with a new control device (1^{st}) and the new control device responds in phase 608. The new control device inclusion is not finished yet in phase 608. Another request from at least one service object is received by the adaptation layer in phase 609. The adaptation layer recognizes the active mission critical state and rejects the request in phase 610. Alternatively, the adaptation layer may respond to the service object with a cached value stored for example in phase 603. The new control device (1^{st}) inclusion related communication continues in phases 611-612. After phase 612 the new control device inclusion is ready and adaptation layer exits the mission critical state in phase 613. After phase 613 a new request from a service object is received in phase 614. The service object of the application layer may request for example a new reading from the second control device, such as the temperature sensor in phase 614. In phase 615, the request is converted by the adaptation layer for the second control device. The second control device may respond with the requested information in phase 616. In phase 617, the adaptation layer converts the response for the requesting service object.

When the new control device is connected over a mesh network to the control system in phases 605-612, the control system needs to recognize the control device in order to offer control device services to the end user via the user interface of the control apparatus. The control device may provide a variety of services such as meters (energy meters, temperature meters, humidity meters, etc.), switches, motion detectors, door/window detectors, IO-devices etc. The list above is not exhaustive. The control system may also need to configure the control device, for example set message routing information or set some measurement rules such as a report-on-change temperature value. The list above is not exhaustive.

The above procedures form a procedure that needs to be communicated with the control device during the control device inclusion to the system. Once the procedure is finished, the services of the control device can be presented on the user interface of the control apparatus and the end user can take the services in use. The procedure may or may not be pre-configured, or it may even be dynamically formed during the inclusion as the control system makes decisions which tasks to execute. During the mission critical operation, such as the inclusion, mission critical state is used to reduce a possibility for failing the mission critical operation, such as the inclusion.

It is possible that a message in wireless mesh network can be lost or even corrupted due to various reasons. For example, overlapping networks may interfere each other, attenuation may exist due to distance between transmitting and receiving entities, reflection and distortion may be caused by building constructions, etc. Used communication technology may incorporate retransmission capability, but this does not necessary guarantee that communication between the control system and device under introduction will succeed.

An adaptation layer of the system controller apparatus 110 may convert system controller internal communication method to the wireless technology communication methods. Wireless technology controller layer may incorporate wireless technology specific retransmissions. Different embodiments may be implemented in adaptation layer with for example threads or processes.

Wireless technology layer of the system controller apparatus 110 may take care of communication with adaptation layer and nodes in the mesh network. It is technology specific how the node is added to the mesh network. After node has been added and it is known to the system controller 210, configuration tasks may be executed.

In an embodiment, the system controller 210 may also set control device 151-153, 400 configurations, for example message routing information or device wake-up interval if the control device 151-153, 400 is battery operated. The control device 151-153, 400 may turn on the radio on configured intervals for communication with the wireless technology controller 213 of the system control apparatus 110 or with other nodes in the mesh network. For such battery operated devices the system controller apparatus 110 may set a wake-up signal that can be used as a task execution trigger. The wake-up signal is also illustrated in item 602.

Once all tasks relating to mission critical operation have been completed, for example the control device inclusion being ready, the control device and services offered are ready to be used. Operation execution and finishing can be shown on the user interface of the system controller apparatus to reflect the progress, so that the end user knows status of the control device inclusion and the mission critical state.

Different embodiments may provide a smart and reliable logic that ensures that the mesh network control device under introduction will be recognized and configured properly so that all the offered control device services can be properly used.

Various embodiments have been presented. It should be appreciated that in this document, words comprise, include and contain are each used as open-ended expressions with no intended exclusivity. If desired, the different functions discussed herein may be performed in a different order and/or concurrently with each other. Furthermore, if desired, one or more of the above-described functions may be optional or may be combined. Although various aspects of the invention are set out in the independent claims, other aspects of the invention comprise other combinations of features from the described embodiments and/or the dependent claims with the features of the independent claims, and not solely the combinations explicitly set out in the claims.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A method for suspending traffic in a control system of a mesh network, **characterized in that** the method comprising:
receiving a control message, by a control apparatus, in a normal state;
detecting a mission critical action relating to a first control device, based on the received control message, wherein the mission critical action comprising at least one of the following:
- control device inclusion;
- control device exclusion; and
- mesh network topology update;
entering a mission critical state;
suspending traffic relating to a second control device in the mission critical state;
performing the mission critical action by communicating with the first control device; and
returning from the mission critical state to the normal state in response to performing the mission critical action.

2. The method of claim 1, further comprising:
receiving a control message generated by a user of the control apparatus;
detecting the mission critical action being an inclusion of the first control device;
performing the inclusion of the first control device by processing configuration tasks with the first control device; and
providing control device functionality for a user of the control apparatus in response to closing the configuration tasks for the first control device.

3. The method of any of claims 1 or 2, further comprising:
receiving, in the mission critical state, a service request relating to the second control device; and
rejecting the service request.

4. The method of any of claims 1 to 3, further comprising:
defining a timer value triggered when entering to the mission critical state; and
resuming to the normal state in response to expiration of the timer value.

5. The method of any of claims 1 to 4, further comprising:
defining an application layer for providing application level service for a user;
defining an adaptation layer for providing application level service for the user; and
defining a wireless technology layer for transceiving messages in the mesh network, wherein the adaptation layer being configured to control entering and exiting the mission control state.

6. The method of any of claims 1 to 5, further comprising:
receiving the service request relating to the second control device by an adaptation layer.

7. An apparatus for suspending traffic in a control system of a mesh network, **characterized in that** the apparatus comprising:
a communication interface for transceiving information, over a mesh network connection, between the apparatus and control devices;
at least one processor; and
at least one memory including computer program code; the at least one memory and the computer program code configured to, with the at least one processor, cause the apparatus to:
receive a control message in a normal state;
detect a mission critical action relating to a first control device, based on the received control message, wherein the mission critical action comprising at least one of the following:
- control device inclusion;
- control device exclusion; and
- mesh network topology update;
enter a mission critical state;
suspend traffic relating to a second control device in the mission critical state;
perform the mission critical action by communicating with the first control device; and
return from the mission critical state to the normal state in response to performing the mission critical action.

8. The apparatus of claim 7, wherein the mesh network connection comprises at least one of the following:
- Z-Wave; and
- Zigbee.

9. The apparatus of claim 7 or 8, wherein the control device comprises at least one of the following:
- a sensor;
- an energy meter;
- a temperature meter;
- a humidity meter;
- a switch;
- a motion detector;
- a door opening/closing detector;
- a window opening/closing detector; and
- an input/output device.

10. A computer program embodied on a computer readable medium comprising computer executable program code **characterized in that** the computer executable program code, when executed by at least one processor of an apparatus, causes the apparatus to:
receive a control message in a normal state;
detect a mission critical action relating to a first control device, based on the received control message, wherein the mission critical action comprising at least one of the following:
- control device inclusion;
- control device exclusion; and
- mesh network topology update;
enter a mission critical state;
suspend traffic relating to a second control device in the mission critical state;
perform the mission critical action by communicating with the first control device; and
return from the mission critical state to the normal state in response to performing the mission critical action.
